# EUROPEAN PATENT APPLICATION

(11) **EP 4 095 684 A1**
(43) Date of publication of application: **30.11.2022**
(21) Application number: 22172322.4
(22) Date of filing: 09.05.2022
(51) Int. Cl.: G06F 9/4401, G06F 21/57, G06Q 20/18, G06Q 30/06

(54) **INFORMATION PROCESSING APPARATUS, MANAGEMENT SYSTEM AND MANAGEMENT METHOD**

(30) Priority: 25.05.2021 JP 2021087736
(71) Applicant: Lenovo (Singapore) Pte. Ltd., New Tech Park 556741 (SG)
(72) Inventor: MORISHIGE, Yusaku, Kanagawa, 3-6-1-21F (JP); WO, Zuying, Kanagawa, 3-6-1-21F (JP); SASAKI, Ken, Kanagawa, 3-6-1-21F (JP); NAGASAWA, Tatsumi, Kanagawa, 3-6-1-21F (JP); NAKAMURA, Tetsuya, Kanagawa, 3-6-1-21F (JP)
(74) Representative: Openshaw & Co.

(57) **Abstract**

The information processing apparatus includes a count value storage section which is a nonvolatile memory which is not directly accessible from an OS (Operating System) and stores a count value which indicates a remaining period of a use period, a BIOS processing section which executes a process which is based on a BIOS (Basic Input Output System), and to prohibit activation of the OS in a case where the count value that the count value storage section stores is a predetermined value and to execute an OS-based activation process in a case where the count value is other than the predetermined value and a count value change section which operates independently of the OS and counts and changes the count value that the count value storage section stores every predetermined unit period in a case where the information processing apparatus is in a working state and the count value is other than the predetermined value.

## Description

### Technical Field

The present invention relates to an information processing apparatus, a management system and a management method.

### Background of the Invention

In an existing information processing apparatus such as a personal computer (PC) and so forth, a BIOS (Basic Input Output System) is executed and thereby the information processing apparatus is initialized and an OS (Operating System) is activated (for example, Japanese Unexamined Patent Application Publication No. 2016-122268).

### Summary of the Invention

Incidentally, in the information processing apparatus, in a case where a use period is to be managed, for example, a technique that a server device which is connected to the information processing apparatus over a network manages the use period and restricts use of the information processing apparatus and a technique that the use period is managed on the basis of an application on the OS and thereby use of the information processing apparatus is restricted on the basis of the application are generally adopted.

However, for example, in a case where it is impossible to connect the information processing apparatus to the network and in a case where the time on the OS is changed, it is difficult to appropriately manage the use period in these existing techniques.

The present invention has been made in order to solve the above-described problem and aims to provide an information processing apparatus, a management system and a management method which make it possible to appropriately manage the use period.

In order to solve the above-described problem, according to one aspect of the present invention, there is provided an information processing apparatus which includes a count value storage section which is a nonvolatile memory which is not directly accessible from the OS and stores a count value which indicates a remaining period of a use period, a BIOS processing section which executes a process which is based on the BIOS, and prohibits activation of the OS in a case where the count value that the count value storage section stores is a predetermined value and to execute an OS-based activation process in a case where the count value is other than the predetermined value and a count value change section which operates independently of the OS and counts and changes the count value that the count value storage section stores every predetermined unit period in a case where the information processing apparatus is in a working state and the count value is other than the predetermined value.

In addition, according to one aspect of the present invention, in the information processing apparatus, the BIOS processing section, in a case where the count value that the count value storage section stores is the predetermined value, may prohibit activation of the OS and make a display unit display a two-dimensional code which contains a URL (Uniform Resource Locator) which is used for connection to the server device which manages renewing of the use period, and may further renew the count value that the count value storage section stores in accordance with a request for renewing the use period which is issued from the server device on the basis of a contract that the user makes for renewal of the use period.

In addition, according to one aspect of the present invention, in the information processing apparatus, the predetermined value may be, for example, "0", and in a case where the information processing apparatus is in the working state and the account value is other than "0", the count value change section may change the count value by performing subtraction on the count value every predetermined unit period.

In addition, according to one aspect of the present invention, in the information processing apparatus, in a case where the information processing apparatus is in the working state and the count value reaches the predetermined value, the count value change section may terminate an operation of the information processing apparatus.

In addition, according to one aspect of the present invention, in the information processing apparatus, a sub control unit which operates independently of a main control unit which executes a process which is based on the OS may include the count value change section and the main control unit may include the BIOS processing section.

In addition, according to one aspect of the present invention, in the information processing apparatus, the sub control unit may include the count value storage section.

In addition, according to one aspect of the present invention, in the information processing apparatus, the count value storage section may be installed outside the sub control unit.

In addition, according to one aspect of the present invention, there is also provided an information processing apparatus including a count value storage section which is a nonvolatile memory which is not directly accessible from an OS (Operating System) and which stores a count value which indicates a remaining period of a use period, a memory which temporarily stores a program and a processor which executes the program which is stored in the memory, in which the processor executes the program which is stored in the memory and thereby performs a BIOS process for execution of a BIOS (Basic Input Output System)-based process, that is, the BIOS process for prohibiting activation of the OS in a case where the count value that the count value storage section stores is a predetermined value and executing an OS-based activation process in a case where the count value is other than the predetermined value, and a count value changing process which is executed independently of the OS and is prepared for counting and changing the count value that the count value storage section stores every predetermined unit period in a case where the information processing apparatus is in a working state and the count value is other than the predetermined value.

In addition, according to one aspect of the present invention, there is also provided a management system including the information processing apparatus and the server device.

In addition, according to one aspect of the present invention, the management system may further include a terminal device which is connected to the server device on the basis of the two-dimensional code and via which a user of the information processing apparatus makes the contract with the server device.

In addition, according to one aspect of the present invention, there is also provided a method of managing an information processing apparatus which includes a count value storage section which is a nonvolatile memory which is not directly accessible from an OS (Operating System) and which stores a count value which indicates a remaining period of a use period, including the steps of prohibiting activation of the OS in a case where the count value that the count value storage unit stores is a predetermined value and executing an OS-based activation process in a case where the count value is other than the predetermined value by a BIOS processing section which executes a process which is based on a BIOS (Basic Input Output System) and executing a count value change process independently of the OS and counting and changing the count value that the count value storage unit stores every predetermined unit period in a case where the information processing apparatus in a working state and the count value is other than the predetermined value by a count value change section.

### Advantageous Effect of the Invention

According to the above-described aspects of the present invention, it becomes possible to appropriately manage the use period of the information processing apparatus.

### Brief Description of the Drawings

FIG. 1 is a schematic block diagram illustrating one configuration example of constitutional elements of a management system according to a first embodiment of the present invention.
FIG. 2 is a block diagram illustrating one configuration example of main hardware constitutional elements of a laptop PC according to the first embodiment of the present invention.
FIG. 3 is a functional block diagram illustrating one configuration example of functional constitutional elements of the management system according to the first embodiment of the present invention.
FIG. 4 is a diagram illustrating one example of data in a customer information storage section in the first embodiment of the present invention.
FIG. 5 is a diagram illustrating one example of data in a purchase history storage section in the first embodiment of the present invention.
FIG. 6 is a flowchart illustrating one example of start-up processing of the laptop PC according to the first embodiment of the present invention.
FIG. 7 is a diagram illustrating one display example of a two-dimensional code on the laptop PC according to the first embodiment of the present invention.
FIG. 8 is a flowchart illustrating one example of count value change processing of the laptop PC according to the first embodiment of the present invention.
FIG. 9 is a diagram illustrating one example of purchase processing of the management system according to the first embodiment of the present invention.
FIG. 10 is a diagram illustrating one configuration example of main hardware constitutional elements of a laptop PC according to a second embodiment of the present invention.
FIG. 11 is a functional block diagram illustrating one configuration example of functional constitutional elements of a management system according to the second embodiment of the present invention.

### Detailed Description of the Invention

In the following, an information processing apparatus, a management system and a management method according to each of first and second embodiments of the present invention will be descried with reference to the drawings.

### [First Embodiment]

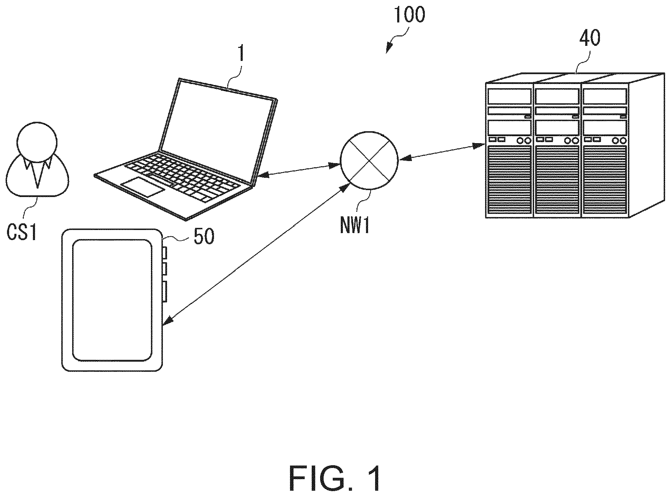

FIG. 1 is a schematic block diagram illustrating one configuration example of constitutional elements of a management system 100 according to the first embodiment of the present invention.

As illustrated in FIG. 1, the management system 100 is configured that a user CS1 who is a purchaser of a system of a laptop PC 1 (a notebook type personal computer) and uses the system purchases and manages a use period of the laptop PC 1 and includes the laptop PC 1, a server device 40 and a terminal device 50.

Incidentally, in the first embodiment, the laptop PC 1 will be described as one example of the information processing apparatus.

The laptop PC 1, the terminal device 50 and the server device 40 are mutually connectable over a network NW1.

The server device 40 is a service management server which is connectable from the laptop PC 21 and the terminal device 50 and provides the user CS1 with a service of purchasing the use period of the system of the laptop PC 1 in accordance with a request from the user CS1. The server device 40 renews and manages the use period of the laptop PC 1. Details of a configuration of the server device 40 will be described later. Incidentally, in the first embodiment, purchasing of the use period of the system of the laptop PC 1 means that the user CS1 makes a contract of purchasing the use period of the system of the laptop PC 1 (or, may be simply the use period of the laptop PC1) with the server device 40 and consequently the use period of the laptop PC 1 is renewed.

It is possible for the user CS1 who purchases the use period of the laptop PC 1 to use the terminal device 50 such as, for example, a smartphone, a tablet PC and so forth. The terminal device 50 detects a two-dimensional code which is displayed on the laptop PC 1 in a case where the purchased use period of the laptop PC 1 expires and the laptop PC 1 is in a start-up prohibited state and connects the laptop PC 1 to the server device 40 by utilizing web browser software via a URL (Uniform Resource Locator) which is contained in the two-dimensional code concerned and is used for connection of the laptop PC 1 to the server device 40. In addition, the terminal device 50 transmits user CS1 information (for example, an account, a password and so forth) which is used for logging into the server device 40 to the server device 40 over the network NW1 and then executes the contract (a subscription contract) of purchasing the use period of the laptop PC 1. Incidentally, details of the configuration of the terminal device 50 will be described later.

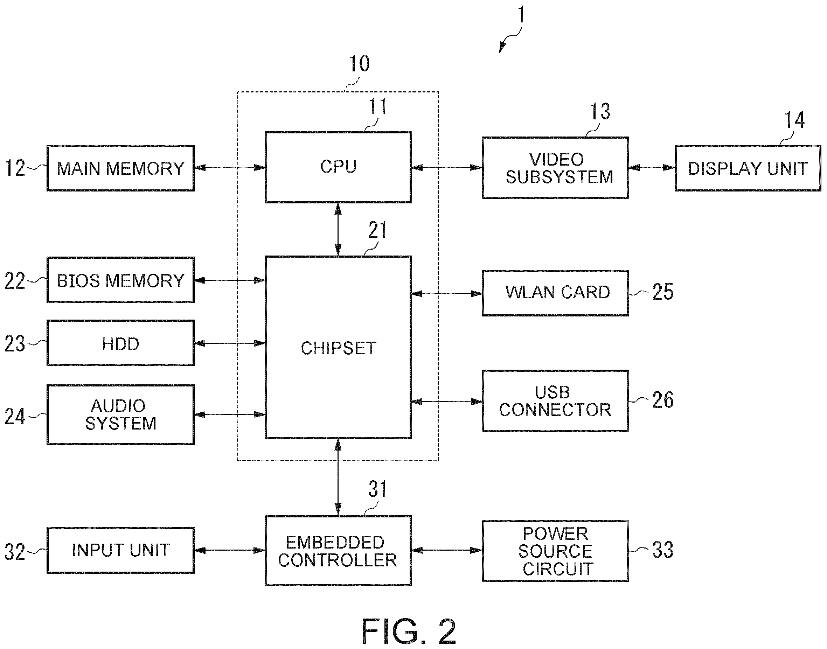

The laptop PC 1 (one example of the information processing apparatus) is of the type which is usable in accordance with the purchased use period. Here, main hardware constitutional elements of the laptop PC 1 will be described with reference to FIG. 2.

FIG. 2 is a diagram illustrating one configuration example of the main hardware constitutional elements of the laptop PC 1 according to the first embodiment.

As illustrated in FIG. 2, the laptop PC 2 includes a CPU (Central Processing Unit) 11, a main memory 12, a video subsystem 13, a display unit 14, a chipset 21, a BIOS (Basic Input Output System) memory 22, an HDD (Hard Disk Drive) 23, an audio system 24, a WLAN (Wireless Local Area Network) card 25, aa USB (Universal Serial Bus) connector 26, an embedded controller 31, an input unit 32 and a power source circuit 33.

Incidentally, in the first embodiment, the CPU 11 and the chipset 21 correspond to a main control unit 10. In addition, the main control unit 10 is one example of a processor (a main processor) which executes a program which is stored in the memory (the main memory 12).

The CPU 11 executes various kinds of arithmetic operation processing under program control and controls the operation of the entire laptop PC 1.

The main memory 12 is a writable memory which is utilized as an area that an execution program of the CPU 11 is read or a work area that processing data of the execution program is written. The main memory 12 is, for example, a plurality of DRAM (Dynamic Random Access Memory) chips. This execution program contains a BIOS, an OS (Operating System), various drivers for operating peripherals and so forth in terms of hardware, various services/utilities, an application program and so forth.

The video subsystem 13 is adapted to realize functions which relate to image display and includes a video controller. The video controller processes a drawing command which is issued from the CPU 11, writes processed drawing information into a video memory and, in addition, reads this drawing information out of the video memory and outputs the read-out drawing information to the display unit 14 as drawing data (display data).

The display unit 14 is, for example, a liquid crystal display and displays a display screen which is based on the drawing data (the display data) which is output from the video subsystem 13. In the first embodiment, in a case where the use period of the laptop PC 1 expires, the display unit 14 displays the two-dimensional code.

The chip set 21 includes controllers for a USB, a serial ATA (AT Attachment) bus, an SPI (Serial Peripheral Interface) bus, a PCI (Peripheral Component Interconnect) bus, a PCI-Express bus, an LPC (Low Pin Count) bus and so forth and a plurality of devices is connected to the chipset 21 via these buses. In FIG. 2, the BIOS memory 22, the HDD 23, the audio system 24, the WLAN card 25 and the USB connector 26 are connected to the chipset 21 as examples of the devices to be connected to the chipset 21.

The BIOS memory 22 is an electrically rewritable nonvolatile memory such as, for example, an EEPROM (Electrically Erasable Programmable Read Only Memory), a flash ROM and so forth. The BIOS memory 22 stores the BIOS and other system firmware and so forth for controlling the embedded controller 31 and so forth.

The HDD 23 (one example of a nonvolatile storage) stores the OS, the various drivers, the various services/utilities, the application program and various kinds of data.

The audio system 24 records, reproduces and outputs sound data.

The WLAN card 25 is connected to the network via a wireless LAN (Local Area Network) and performs data communication with the server device 40. The EWLAN card 25 is connected to the server device 40 over, for example, the network NW1 and performs data communication for downloading an EFI (Extensible Firmware Interface) file which is used for renewing the use period with the server device 40.

The USB connector 26 is used for connection of the peripherals and so forth which utilize the USB.

The embedded controller 31 (one example of a sub control unit) is a one-chip microcomputer (One-Chip Microcomputer) which monitors and controls the operations of various devices (the peripherals, sensors and so forth) regardless of the system state of the laptop PC 1. In addition, the embedded controller 31 has a power source management function for controlling the operation of the power source circuit 33. Incidentally, the embedded controller 31 is configured by not-illustrated CPU, ROM (Read Only Memory), RAM (Random Access Memory) and so forth and includes A/D input terminals, D/A output terminals, timers and digital input/output terminals of a plurality of channels. For example, the input unit 32, the power source circuit 33 and so forth are connected to the embedded controller 31 via the above-described input and output terminals and the embedded controller 31 controls the operations of the input unit 32, the power source circuit 33 and so forth.

In addition, the embedded controller 31 controls the operation of the power source circuit 33 in accordance with system states (for example, an S0 state (an S0x state) to an S5 state) which are defined in the ACPI (Advanced Configuration and Power Interface) specification. Here, the S0 state is the most active state and is a usual working state (a usual operating state) . In addition, the S3 state corresponds to a sleep mode and the S4 state corresponds to a hibernation mode. In addition, the S5 state is a shutdown state (a power-off state) that the power source is turned off in terms of software. In addition, the S0x state corresponds to a modern standby mode. Incidentally, the embedded controller 31 is one example of a processor (a sub-processor) which executes a program which is stored in a memory (an internal RAM).

The input unit 32 is an input element such as, for example, a keyboard, a pointing device, a touch pad and so forth.

The power source circuit 33 includes, for example, a DC/DC converter, a charge/discharge unit, a battery unit, an AC/DC adapter and so forth and converts a DC voltage which is supplied from the AC/DC adapter or the battery unit to voltages of a plurality of levels which are necessary to operate the laptop PC 1. In addition, the power source circuit 33 supplies electric power to respective constitutional elements of the laptop PC 1 on the basis of control from the embedded controller 31.

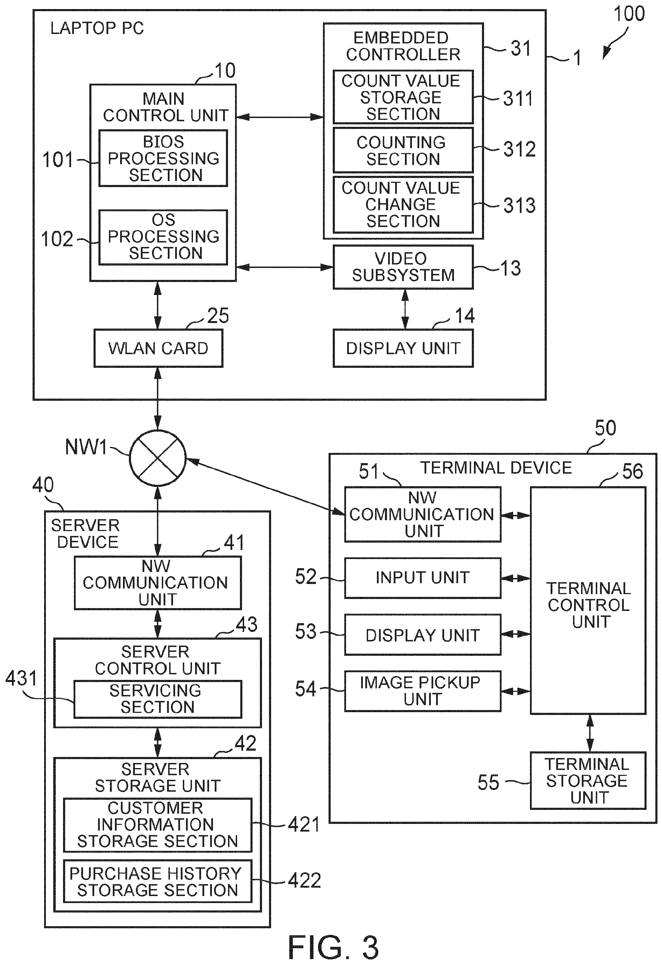

Next, functional constitutional elements of the management system 100 according to the first embodiment of the present invention will be described with reference to FIG. 3.

FIG. 3 is a functional block diagram illustrating one configuration example of the functional constitutional elements of the system 100 according to the first embodiment of the present invention.

As illustrated in FIG. 3, the management system 100 includes the laptop PC 1, the server device 40 and the terminal device 50.

The laptop PC 1 includes the main control unit 10, the video subsystem 13, the display unit 14, the embedded controller 31 and the WLAN card 25.

The embedded controller 31 includes a count value storage section 311, a counting section 312 and a count value change section 313.

The count value storage section 311 is a nonvolatile memory which is not directly accessible from, for example, OSs (Windows (the registered trademark) and so forth) and stores a count value which indicates a remaining period of the use period of the laptop PC 1. The count value may be either, for example, in the form of such and such a day, such and such an hour, such and such a minute and such and such a second or, for example, a simple count value which is counted every unit period of five minutes. Here, description will be made on the prediction that the count value storage section 311 is built in the embedded controller 31.

The counting section 312 is, for example, a timer which is built in the embedded controller 31 and counts a predetermined unit period (for example, one minute, five minutes and so forth) . In a case where an own device (the laptop PC 1) is in the working state (for example, the S0 state), the counting section 312 performs counting and counts the predetermined unit period. Incidentally, the embedded controller 31 detects whether the laptop PC 1 (the system) is in, for example, the S0 state from the system state and a control signal which controls the operation of the power source circuit 33 or a notification from the BIOS.

The count value change section 313 is operated independently of the OS and in a case where the own device (the laptop PC 1) is in the working state (for example, the S0 state) and the count value is other than a predetermined value, counts and changes the count value that the count value storage section 311 stores every predetermined unit period. Incidentally, in the first embodiment, one example of a case where the predetermined value is, for example, "0" will be described. In the case where the own device is in the working state and the count value is other than "0", the count value change section 313 changes the count value by performing subtraction on the count value (for example, decrementing the count value) every predetermined unit period.

In addition, in a case where the own device is in the working state (for example, the S0 state) and the count value reaches the predetermined value ("0"), the count value change section 313 terminates the operation of the own device (for example, works to shut down the laptop PC 1 (or the OS)). In the case where the count value reaches the predetermined value ("0"), the count value change section 313 generates an event in the BIOS (the BIOS processing section 101 which will be described later) and makes the BIOS (the BIOS processing section 101 which will be described later) shut down the laptop PC 1 (or the OS).

The main control unit 10 is a function unit which is realized by making the CPU 11 and the chipset 21 execute programs that the BIOS memory 22 and the HDD 23 store respectively and executes various BIOS-based and OS-based processes of the laptop PC 1. The main control unit 10 includes the BIOS processing section 101 and an OS processing section 102.]

The BIOS processing section 101 executes the BIOS-based process. The BIOS processing section 101 executes, for example, a BIOS-based process which is called a POST (Power-On Self-Test) of the laptop PC 1. In addition, in the case where the count value that the count value storage section 311 stores is the predetermined value ("0"), the BIOS processing section 101 prohibits activation of the OS. In this case, the BIOS processing section 101 enables only cloud booting for renewing the count value that the count value storage section 311 stores and prohibits other boot options. In addition, in this case, the BIOS processing section 101 makes the display unit 14 display a two-dimensional code (for example, QR Code (the registered trademark)) which contains a URL which is used for connection to the server device 40 which manages renewal of the use period via the video subsystem 13.

In addition, in the case where the count value that the count value storage section 311 stores is other than the predetermined value (other than "0"), the BIOS processing section 101 executes an OS-based activation process.

Further, the BIOS processing section 101 renews the count value that the count value storage section 311 stores in accordance with a request for renewing the count value which is issued from the server device 40 on the basis of the purchasing contract that the user CS1 makes for renewing the use period. The BIOS processing section 101 realizes renewal of the count value, for example, by downloading the EFI file which is used for renewing the count value (the use period) by cloud booting from the server device 40 and by performing booting in the EFI mode.

The OS processing section 102 executes OS-based processes. The OS processing section 102 executes the OS-based processes of various kinds of application software and so forth.

The terminal device 50 is connected to the server device 40 on the basis of the two-dimensional code that the laptop PC 1 displays and then the user CS1 of the laptop PC 1 makes the contract with the server device 40 via the terminal device 50. The terminal device 50 includes an NW (network) communication unit 51, an input unit 52, a display unit 53, an image pickup unit 54, a terminal storage unit 55 and a terminal control unit 56.

The NW communication unit 51 is connected to the network NW1 via network communication using, for example, a wireless LAN (Local Area Network), a wireless WAN (Wide Area Network) and so forth and communicates with the server device 40.

The input unit 52 is an input element such as, for example, a touch panel and so forth and accepts various kinds of information that the terminal device 50 utilizes. The input unit 52 accepts, for example, log-in information (an account, a password and so forth) which is used to log in the server device 40 from the user CS1 and outputs the accepted log-in information to the terminal control unit 56.

The display unit 53 is a display element such as, for example, a liquid crystal display and so forth and displays the various kinds of information that the terminal device 50 utilizes.

The image pickup unit 54 is, for example, a digital camera module and so forth and picks up various images. The image pickup unit 54 picks up an image of the two-dimensional code which is displayed on the display unit 14 of the laptop PC 1 and outputs the image which contains the two-dimensional code to the terminal control unit 56.

The terminal storage unit 55 is, for example, a flash memory and so forth and stores the various kinds of information that the terminal device 50 utilizes.

The terminal control unit 56 is, for example, a processor which includes a CPU and comprehensively controls the operation of the terminal device 50. The terminal control unit 56 acquires the image which contains the two-dimensional code that the image pickup unit 54 picks up and acquires information such as the URL and so forth of the server device 40 which is contained in the two-dimensional code. In addition, the terminal control unit 56 acquires the account and the password, input information which is used when purchasing the use period and so forth via the input unit 52. The terminal control unit 56 is connected to the server device 40 via the NW communication unit 51 via the acquired URL. The terminal control unit 56 executes the contract for purchasing the use period of the laptop PC 1 in accordance with an operation of the user CS1.

The server device 40 includes an NW communication unit 41, a server storage unit 42 and a server control unit 43.

The NW communication unit 41 is, for example, a wireless LAN module, a wired LAN module and so forth, is connected to the network NW1 via network communication using the wireless LAN, a wired LAN and so forth and communicates with the laptop PC 1 and/or the terminal device 50.

The server storage unit 42 is a storing element such as, for example, an HDD, an SSD (Solid State Drive) and so forth and stores various kinds of information that the server device 40 utilizes. The server storage unit 42 includes, for example, a customer information storage section 421 and a purchase history storage section 422.

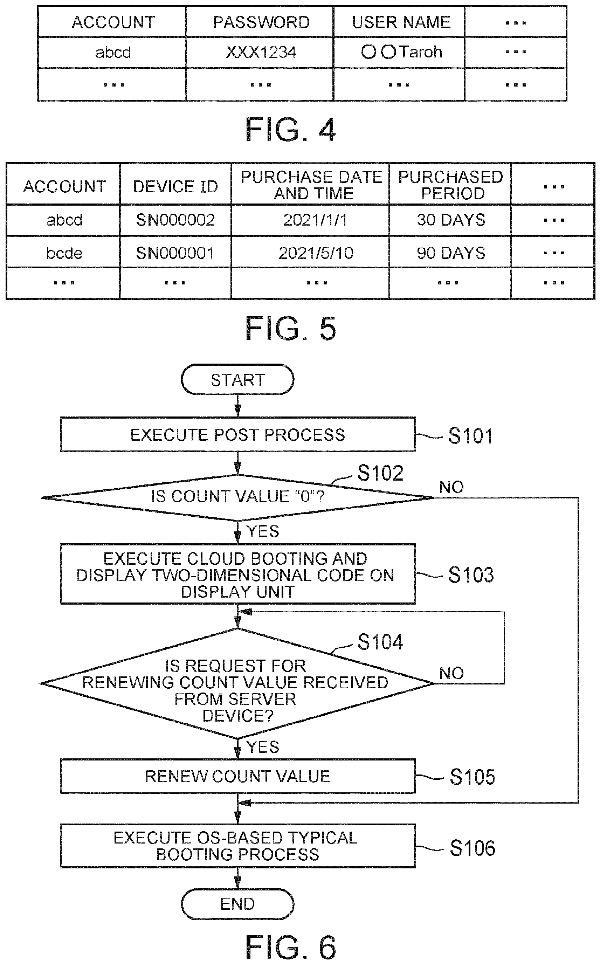

The customer information storage section 421 stores information such as the log-in information of the customer who is the user CS1 of the laptop PC 1 and purchases the use period and so forth. Here, an example of data in the customer information storage section 421 will be described with reference to FIG. 4.

FIG. 4 is a diagram illustrating one example of the data in the customer information storage section 421 in the first embodiment.

As illustrated in FIG. 4, the customer information storage section 421 stores the account, the password and the user's name in one-to-one correspondence with one another.

Here, the account and the password are the log-in information of each user CS1 who utilizes the management system 100. In addition, the user's name indicates the name of each user CS1. For example, in the example which is illustrated in FIG. 4, it is indicated that a log-in password of the user CS1 whose account is "abcd" is "XXX1234" and the name of the user CS1 is "OO Taroh".

Incidentally, the address, the telephone number, the mail address and so forth of each user CS1 may be stored into the customer information storage section 412 in addition to the user name.

The purchase history storage section 422 which is illustrated in FIG. 3 stores the purchase history of the use period. Here, one example of data in the purchase history storage section 422 will be described with reference to FIG. 5.

FIG. 5 is a diagram illustrating one example of the data in the purchase history storage section 422 in the first embodiment.

As illustrated in FIG. 5, the purchase history storage section 422 stores therein the account, a device ID, purchase date and time and a purchase period in one-to-one correspondence with one another.

Here, the device ID is device identification information which is used to identify the laptop PC 1 the use period of which is purchased such as, for example, the serial number and so forth of the laptop PC 1. In addition, the purchase date and time indicate the date and time that the user CS1 purchased the use period and the purchase period indicates the purchased use period of the laptop PC 1.

For example, in the example which is illustrated in FIG. 5, it is indicated that the user CS1 whose account is "abed" purchased the purchase period "30H" for the laptop PC 1 the device ID of which is "SN000002" on the purchase date "2021/1/1" (January 1, 2021 A.D.). In addition, it is also indicated that the user CS1 whose account is "bcde" purchased the purchase period "90H" for the laptop PC 1 the device ID of which is "SN000001" on the purchase date "2021/5/10" (May 10, 2021 A.D.).

The server control unit 43 which is illustrated in FIG. 3 is, for example, a processor which includes a CPU and comprehensively controls the operation of the server device 40. The server control unit 43 includes a servicing section 431.

The servicing section 431 executes a process of providing a service of purchasing the use period of the laptop PC 1 via a website. The servicing section 431 accepts a log-in process that the user CS1 executes via the terminal device 50 and, in addition, accepts, for example, a request for purchasing the use period of the laptop PC 1 which is made by using a purchase form via the website and executes payment processing. In addition, the servicing section 431 confirms that payment is completed via the website and thereafter it becomes possible for the servicing section 431 to transmit a request for renewing the count value which corresponds to the purchased use period to the laptop PC 1 the use period of which is purchased over the network NW1. The servicing section 431 transmits the request for renewing the use period to the EFI file which is loaded to the laptop PC 1 by the cloud booting via the NW communication unit 41.

Next, operations of the management system 100 according to the first embodiment will be described with reference to the drawings.

Here, first, startup processing of the laptop PC 1 in the management system 100 will be described with reference to FIG. 6.

FIG. 6 is a flowchart illustrating one example of the startup processing of the laptop PC 1 according to the first embodiment.

As illustrated in FIG. 6, when a power source button is pressed or reset, the laptop PC 1 executes the POST first (step S101). The BIOS processing section 101 of the laptop PC 1 executes the POST.

Next, the BIOS processing section 101 decides whether the count value is "0" (step S102) . The BIOS processing section 101 acquires the count value that the count value storage section 311 stores via the embedded controller 31 and decides whether the acquired count value (the remaining use period) is "0". In a case where the count value is "0" (step S102: YES), the BIOS processing section 101 proceeds the processing to step S103. On the other hand, in a case where the count value is not "0" (step S102: NO), the BIOS processing section 101 proceeds the processing to step S106.

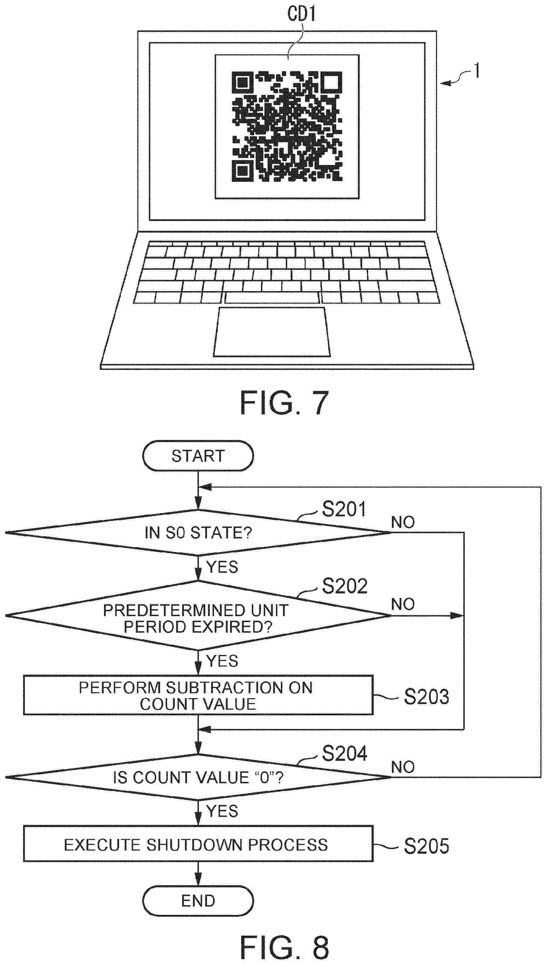

In step S103, the BIOS processing section 101 executes the cloud booting and displays the two-dimensional code on the display unit 14. The BIOS processing section 101 establishes connection with, for example, the server device 40 over the network NW1 and makes the display unit 14 display the two-dimensional code (for example, a QR Code (the registered trademark)) which contains the URL of the server device 40 via the video subsystem 13 (for example, see FIG.7).

Incidentally, FIG. 7 is a diagram illustrating a display example of the two-dimensional code of the laptop PC 1 according to the first embodiment.

As illustrated in FIG. 7, in the case where the count value is "0", the laptop PC 1 operates to display a two-dimensional code CD1 such as, for example, the QR Code (the registered trademark) and so forth on the display unit 14.

Next, the BIOS processing section 101 decides whether the request for renewing the count value is received from the server device 40 (step S104) . The BIOS processing section 101 decides whether the request for renewing the count value which accords with the use period that the user CS1 contracted to purchase by using the terminal device 50 is received from the server device 40 over the network NW1. In a case where the request for renewing the count value is received from the server device 40 (step S104: YES), the BIOS processing section 101 proceeds the processing to step S105. On the other hand, in a case where the request for renewing the count value is not received from the server device 40 (step S104: NO), the BIOS processing section 101 returns the processing to step S103.

In step S105, the BIOS processing section 101 renews the count value. The BIOS processing section 101 makes the count value storage section 311 store a value which is obtained by converting the value which accords with the use period that the user CS1 purchased to the count value that the count value storage section 311 stores on the basis of the EFI file that the request for renewing the count value is received and thereby renews the count value. Incidentally, the BIOS processing section 101 renews the count value that the count value storage section 311 stores via the embedded controller 31.

Next, in step S106, the BIOS processing section 101 executes an OS-based typical booting process. That is, the BIOS processing section 101 executes the OS-based activation process. After execution of the process in step S106, the BIOS processing section 101 terminates execution of the activation process.

Next, count value change processing that the laptop PC 1 according to the first embodiment executes will be described with reference to FIG. 8.

FIG. 8 is a flowchart illustrating one example of the count value change processing that the laptop PC 1 according to the first embodiment executes.

As illustrated in FIG. 8, first, the laptop PC 1 decides whether the system thereof is in the S0 state (step S201) . The embedded controller 31 of the laptop PC 1 decides whether the system is in the S0 state on the basis of, for example, the system state and a control signal which controls the operation of the power source circuit 33, a notification from the BIOS and so forth. In a case where the system is in the S0 state (step S201: YES), the embedded controller 31 proceeds the processing to step S202. On the other hand, in a case where the system is not in the S0 state (step S201: NO), the embedded controller 31 proceeds the processing to step S204.

In step S202, the embedded controller 31 decides whether the predetermined unit period has expired. The count value change section 313 of the embedded controller 31 decides whether the predetermined unit period has expired by using the counting section 312. In a case where the predetermined unit period has expired (step S202: YES), the count value change section 313 proceeds the processing to step S203. On the other hand, in a case where the predetermined unit period does not yet expire (step S202: NO), the count value change section 313 proceeds the processing to step S204.

In step S203, the count value change section 313 performs subtraction on the count value. That is, the count value change section 313 changes the count value that the count value storage section 311 stores by performing subtraction on the count value (for example, by decrementing the count value).

Next, in step S204, the count value change section 313 decides whether the count value is "0". The count value change section 313 acquires the count value that the count value storage section 311 stores and decides whether the count value (the remaining use period) is "0". In the case where the count value is "0" (step S204: YES), the count value change section 313 proceeds the processing to step S205. On the other hand, in the case where the count value is not "0" (step S204: NO), the count value change section 313 returns the processing to step S201.

In step S205, the count value change section 313 executes a shutdown process. That is, the count value change section 313 generates the event in the BIOS processing section 101 (or the BIOS) and makes the BIOS processing section 101 (or the BIOS) shut down the laptop PC 1 (or the OS). After execution of the process in step S205, the count value change section 313 terminates execution of the count value change processing.

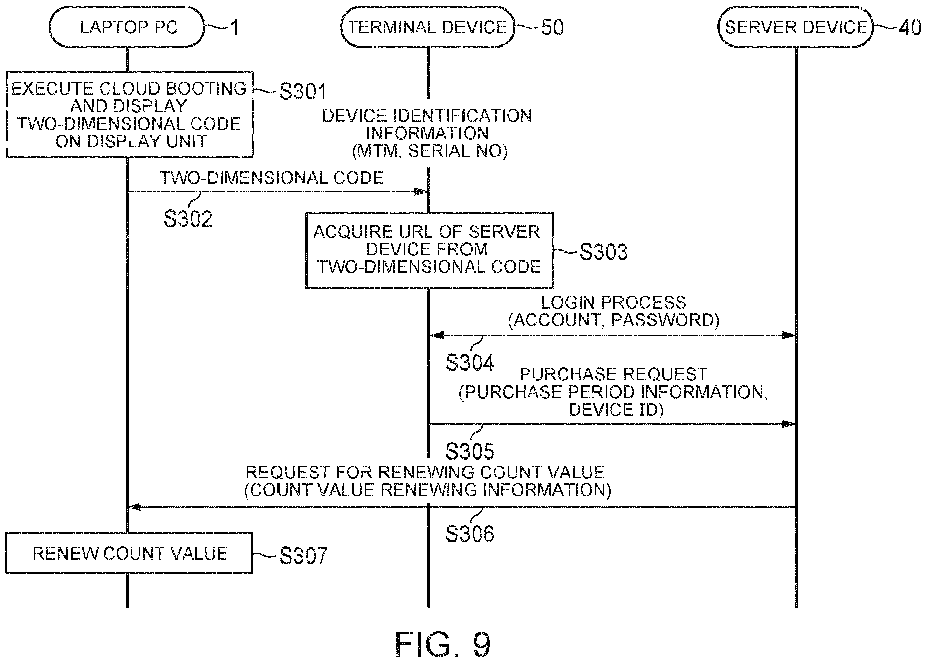

Next, processing of purchasing the use period of the laptop PC 1 in the management system 100 according to the first embodiment will be described with reference to FIG. 9.

FIG. 9 is a diagram illustrating one example of the processing of purchasing the use period of the laptop PC 1 in the management system 100 according to the first embodiment.

In FIG. 9, one example of the case where the count value of the laptop PC 1 is "0" (the use period has expired) will be described.

As illustrated in FIG. 9, in the case where the count value that the count value storage section 311 stores is "0", the laptop PC 1 executes the cloud booting and displays the two-dimensional code on the display unit 14 (step S301). Incidentally, in this case, the URL of the server device 40 is contained in the two-dimensional code.

Then, the terminal device 50 reads the two-dimensional code out of the laptop PC 1 (step S302) . The terminal control unit 56 of the terminal device 50 acquires an image of the two-dimensional code which is picked up by using the image pickup unit 54.

Then, the terminal control unit 56 of the terminal device 50 acquires the URL of the server device 40 from the two-dimensional code (step S303).

Then, the terminal device 50 establishes connection with the server device 40 by utilizing browser software and executes a login process (step S304). The terminal control unit 56 establishes connection with the server device 40 via the NW communication unit 51 over the network NW1 and acquires the account and the password which are used in execution of the login process from the user CS1 via the input unit 52. The terminal control unit 56 transmits the acquired account and password to the server device 40.

In addition, the servicing section 431 of the server device 40 receives the account and the password that the terminal device 50 transmits and in a case where the received account and password match the account and password that the customer information storage section 421 stores respectively, permits log-in.

Then, the terminal device 50 transmits the request for purchasing the use period of the laptop PC 1 to the server device 40 (step S305). The terminal control unit 56 transmits the purchase request which contains purchase period information which is information on the use period to be purchased and the device ID to the server device 40 and the server device 40 executes a process of paying a purchase fee of the use period.

Then, the server device 40 transmits the request for renewing the count value (count value renewing information) to the laptop PC 1 (step S306). The servicing section 431 transmits the request for renewing the account value which accords with the use period that the user CS1 purchased to the laptop PC 1 via the NW communication unit 41.

Then, the laptop PC 1 renews the count value in accordance with the request for renewing the count value (step S307) . The BIOS processing section 101 of the laptop PC 1 renews the count value that the count value storage section 311 stores via the embedded controller 31. Thereby, it becomes possible for the laptop PC 1 to execute the OS-based typical booting process.

As described above, the laptop PC 1 (the information processing apparatus) according to the first embodiment includes the count value storage section 311, the BIOS processing section 101 and the count value change section 313. The count value storage section 311 is the nonvolatile memory which is not directly accessible from the OS and stores the count value which indicates the remaining period of the use period of the laptop PC 1. The BIOS processing section 101 executes a BIOS-based process and in the case where the count value that the count value storage section 311 stores is the predetermined value (for example, "0"), prohibits activation of the OS. On the other hand, in the case where the count value that the count value storage section 311 stores is other than the predetermined value (for example, in a case where the count value is not "0"), executes the OS-based activation process. The count value change section 313 operates independently of the OS and in the case where the own device (the laptop PC 1) is in the working state and the count value is other than the predetermined value (for example, in the case where the count value is not "0"), counts and changes the count value that the count value storage section 311 stores every predetermined unit period.

Thereby, in the laptop PC 1 according to the first embodiment, since the count value that the count value storage unit 311 stores is changed every predetermined unit period and, in the case where the count value is the predetermined value (for example, "0"), activation of the OS is prohibited, it becomes possible to appropriately manage the use period. For example, even in a case where it is difficult to connect the laptop PC 1 to the network and even in a case where the time on the OS is changed or in a case where a button battery for RTC (Real Time Clock) is removed, it is possible to appropriately manage the use period of the laptop PC 1.

In addition, in the first embodiment, in the case where the count value that the count value storage section 311 stores is the predetermined value (for example, "0"), the BIOS processing section 101 prohibits activation of the OS and makes the display unit 14 display the two-dimensional code (for example, the QR Code (the registered trademark)) which contains the URL which is used for connection to the server device 40 which manages renewal of the use period. In addition, the BIOS processing section 101 renews the count value that the count value storage section 311 stores further in accordance with the request for renewing the use period which is issued from the server device 40 on the basis of the contract (the purchase contract) which is made to renew the use period of the laptop PC 1 by the user CS1.

Therefore, in the laptop PC 1 according to the first embodiment, the user CS1 makes the contract of purchasing the use period by utilizing the server device 40 and thereby it becomes possible to appropriately renew the use period of the laptop PC 1.

In addition, in the first embodiment, the predetermined value is "0". In the case where the own device (the laptop PC 1) is in the working state (for example, in the S0 state) and the count value is other than "0", the count value change section 313 performs subtraction on the count value (for example, decrements the count value) and thereby changes the count value every predetermined unit period.

Thereby, it becomes possible for the laptop PC 1 pertaining to the first embodiment to appropriately manage the use period of its own by such simple configuration and technique that in a case where the count value reaches "0" by performing subtraction on the count value, activation of the OS is prohibited.

In addition, in the first embodiment, in a case where the own device (the laptop PC 1) is in the working state and the count value reaches the predetermined value (for example, "0"), the count value change section 313 works to terminate (for example, shuts down) the operation of the own device (the laptop PC 1) .

Thereby, in the laptop PC 1 according to the first embodiment, in a case where the use period has expired (the count value reaches the predetermined value (for example, "0")), the operation of the laptop PC is terminated (for example, is shut down) immediately. Therefore, it becomes possible to manage the use period of the laptop PC 1 more appropriately.

In addition, in the first embodiment, the embedded controller 31 (a sub control unit) which operates independently of the main control unit 10 which executes an OS-based process includes the count value change section 131. In addition, the main control unit 10 includes the BIOS processing section 101.

Thereby, in the laptop PC 1 according to the first embodiment, since the embedded controller 31 (the sub control unit) which operates independently of the main control unit 10 changes the count value, it becomes possible to eliminate unauthorized changing of the count value and so forth which would be made from the main control unit 10.

Incidentally, the laptop PC 1 according to the first embodiment includes the count value storage section 311, a memory (such as, for example, the main memory 12, a RAM which is built in the embedded controller 31 and so forth) which temporarily stores the program and a processor (such as, for example, the main control unit 10, the embedded controller 31 and so forth) which executes the program which is stored in the memory. The count value storage section 311 is the nonvolatile memory which is not directly accessible from the OS and stores the count value which indicates the remaining period of the use period of the laptop PC 1. The processor is performs a BIOS process and a count value changing process by executing the program which is stored in the memory. The BIOS process is prepared for execution of a BIOS-based process and prohibits activation of the OS in the case where the count value that the count value storage section 311 stores is the predetermined value and to execute the OS-based activation process in the case where the count value is other than the predetermined value. In addition, the count value changing process is executed independently of the OS and counts and changes the count value that the count value storage section 311 stores every predetermined unit period in the case where the own device (the laptop PC 1) is in the working state and the count value is other than the predetermined value.

In addition, the management system 100 according to the first embodiment includes the laptop PC 1 1 and the server device 40.

Thereby, it becomes possible for the management system 100 to exhibit effects which are the same as effects of the laptop PC 1 and to appropriately manage the use period of the laptop PC 1.

In addition, the management system 100 according to the first embodiment includes the terminal device 50 which is connected to the server device 40 on the basis of the two-dimensional code and via which the user CS1 of the laptop PC 1 makes the contract with the server device 40.

Thereby, it becomes possible for the management system 100 to renew the use period of the laptop PC 1 by using the terminal device 50 which is different from the laptop PC 1 and therefore it becomes possible to prohibit use of the laptop PC 1 (prohibit activation of the OS) in a case where the use period of the laptop PC 1 has expired.

A management method according to the first embodiment is adapted to manage the laptop PC 1 which includes the count value storage section 311 which is the nonvolatile memory direct which is not directly accessible from the OS and which stores the count value which indicates the remaining period of the use period of the laptop PC 1 and includes the activation step and the change step. In the activation step, the BIOS processing section 101 which executes the BIOS-based process prohibits activation of the OS in the case where the count value that the count value storage section 311 stores is the predetermined value (for example, "0") and executes the OS-based activation process in the case where the count value is other than the predetermined value (for example, other than "0"). In the change step, the count value change section 313 operates independently of the OS and, in a case where the own device is in the working state (for example, the S0 state) and the count value is other than the predetermined value (for example, other than "0"), counts and changes the count value that the count value storage section 311 stores every predetermined unit period.

Thereby, it becomes possible for the management method according to the first embodiment to exhibit effects which are the same as the effects of the laptop PC 1 and the management system 100 and to appropriately manage the use period of the laptop PC 1.

### [Second Embodiment]

Next, a management system 100a and a laptop PC 1a according to the second embodiment of the present invention will be described with reference to the drawings. In the second embodiment, one example that the count value is stored into an external memory which is installed outside the embedded controller 31a will be described.

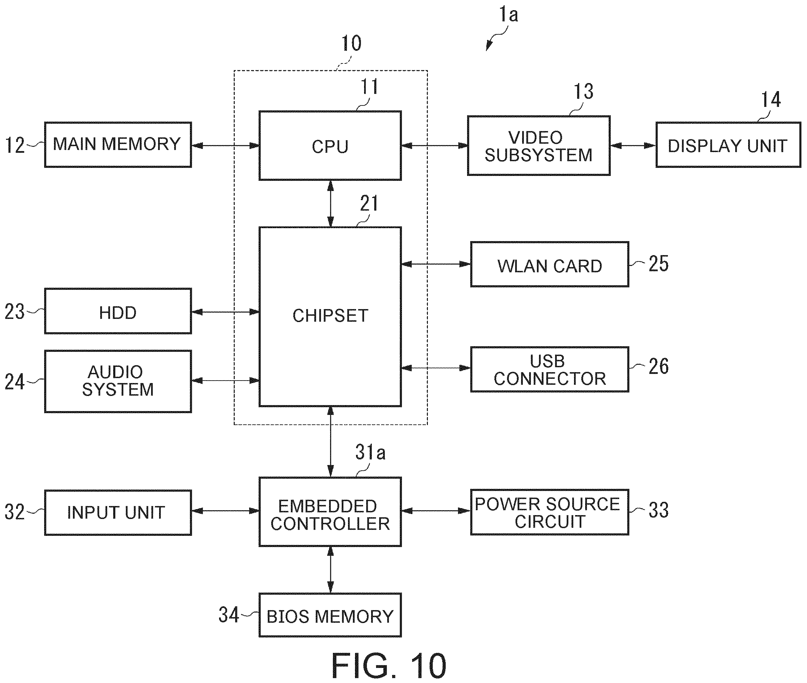

FIG. 10 is a diagram illustrating one configuration example of main hardware constitutional elements of the laptop PC 1a according to the second embodiment.

As illustrated in FIG. 10, the laptop PC 1a includes the CPU 11, the main memory 12, the video subsystem 13, the display unit 14, the chipset 21, the HDD 23, the audio system 24, the WLAN card 25, the USB connector 26, the embedded controller 31a, the input unit 32, the power source circuit 33 and a BIOS memory 34.

Incidentally, in FIG. 10, the same symbols are assigned to the constitutional elements which are the same as the constitutional elements in FIG. 2 and description thereof is omitted. The second embodiment is different from the first embodiment in the point that the BIOS memory 22 in the first embodiment is connected to the embedded controller 31a as the BIOS memory 34.

The embedded controller 31a in the second embodiment has an eSPI (Enhanced Serial Peripheral Interface) bus and is connected to the BIOS memory 34 via the eSPI bus. In the second embodiment, the BIOS memory 34 is connected to the embedded controller 31a by, for example, a Slave Attached Flash system and the main control unit 10 is accessible to the BIOS memory 34 via the embedded controller 31a which is connected via the eSPI bus.

Incidentally, in the Slave Attached Flash system, the main control unit 10 is defined as a Master, the embedded controller 31a which is a Slave of the main control unit 10 is connected to the main control unit 10 and further the BIOS memory 34 is connected to the embedded controller 31a as its Slave. Owing to this connection, it becomes possible for the embedded controller 31a to gain access to the BIOS memory 34 and it becomes also possible for the main control unit 10 to gain access to the BIOS memory 34 via the embedded controller 31a.

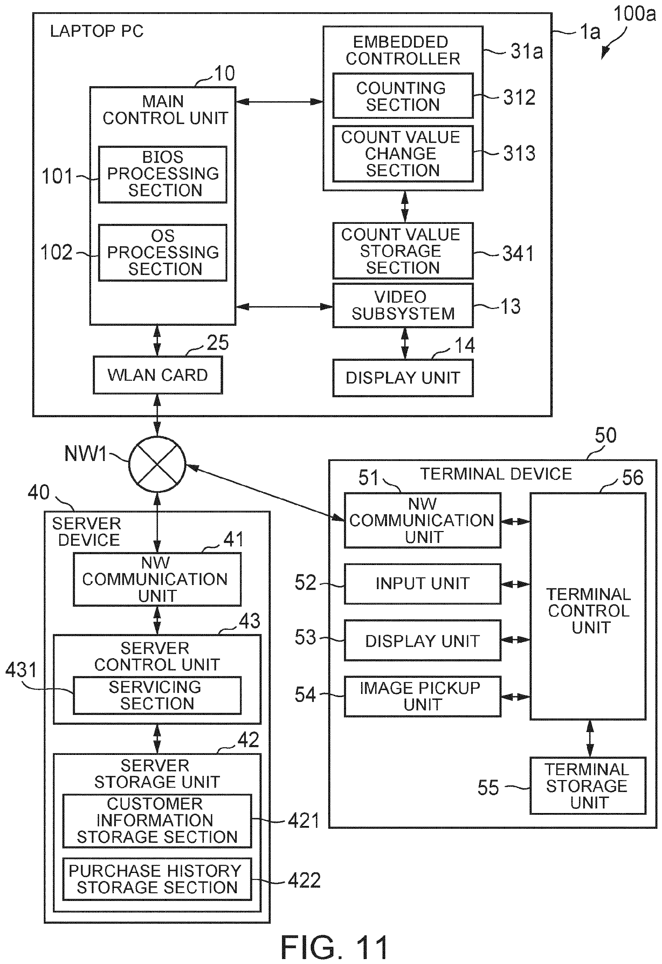

Next, the functional constitutional elements of the management system 100a according to the second embodiment will be described with reference to FIG. 11.

FIG. 11 is a functional block diagram illustrating one configuration example of the functional constitutional elements of the management system 100a.

As illustrated in FIG. 11, the management system 100a includes the laptop PC 1a, the server device 40 and the terminal device 50.

Incidentally, in FIG. 11, the same symbol is assigned to the constitutional element which is the same as the constitutional element in FIG. 3 and description thereof is omitted.

The laptop PC 1a includes the main control unit 10, the video subsystem 13, the display unit 14, the embedded controller 31a, the WLAN card 25 and a count value storage section 341.

The embedded controller 31a includes the count value storage section 311 and the counting section 312. That is, in the second embodiment, the count value storage section 341 is installed outside the embedded controller 31a.

The count value storage section 341 is, for example, a nonvolatile memory which is not directly accessible from the OSs (Windows (the registered trademark) and so forth) and is included in the BIOS memory 34. That is, the BIOS memory 34 includes the count value storage section 341 therein. The count value storage section 341 stores the count value which indicates the remaining period of the use period of the laptop PC 1a.

In addition, in the second embodiment, the count value change section 313 changes the count value that the count value storage section 341 which is installed outside the embedded controller 31a stores.

Other constitutional elements are the same as those in the first embodiment and therefore description thereof is omitted.

As described above, the laptop PC 1a (the information processing apparatus) according to the second embodiment includes the count value storage section 341, the BIOS processing section 101 and the count value change section 313.

Owing to this configuration, the laptop PC 1a and the management system 100a according to the second embodiment exhibit the effects which are the same as the effects of the laptop PC 1 and the management system 100 according to the first embodiment and therefore it becomes possible for the laptop PC 1a and the management system 100a to appropriately manage the use period of the laptop PC 1a.

In addition, in the second embodiment, the count value storage section 341 is installed outside the embedded controller 31a.

Owing to this configuration, in the laptop PC 1a and the management system 100a according to the second embodiment, for example, even in a case where it is difficult to store the count value into the embedded controller 31a, it becomes possible to appropriately manage the use period of the laptop PC 1a.

Incidentally, the present invention is not limited to the above-described respective embodiments and various modifications are possible within the range not deviating from the gist of the present invention.

For example, although in each of the above embodiments, the example that the information processing apparatus is the laptop PC 1 (1a) is described, the information processing apparatus is not limited to the laptop PC and other information processing apparatuses such as, for example, a tablet terminal device, a desktop PC and so forth may be available. In addition, the information processing apparatus is not limited to the configuration which includes the main control unit 10 and the sub control unit (the embedded controller 31 (31a) and the information processing apparatus may also have such a configuration that one control unit includes the BIOS processing section 101 and the count value change section 313.

In addition, although in each of the above embodiments, the example that the terminal device 50 is the portable terminal such as the smartphone, the tablet PC and so forth is described, the terminal device 50 is not limited to the portable terminal such as the smartphone, the tablet PC and so forth. The terminal device 50 may be a terminal device of another type such as, for example, a desk-top PC and so forth as long as the terminal device is of the type that, for example, acquisition of the two-dimensional code is possible and connection to the server device 40 is possible.

In addition, although in each of the above embodiments, description is made on the assumption that one server device 40 is installed, the number of the server devices to be installed is not limited to one and the server device 40 may be a plurality of devices (for example, a plurality of server devices).

In addition, although in each of the above embodiments, the example that the two-dimensional code is the QR Code is described, the code is not limited to the QR Code (the registered trademark) and other two-dimensional codes may be also used.

In addition, although in each of the above embodiments, the example that the predetermined value of the count value is "0" is described, the predetermined value may be a value which is other than "0" (for example, an upper-limit count value and so forth of the use period). In addition, in this case, the count value change section 313 may change the count value by addition (for example, incrementation), instead of changing the count value by subtraction (for example, decrementation).

In addition, although in each of the above embodiments, the example that the counting section 312 that the embedded controller 31 (31a) includes executes timing (counting) of the predetermined unit period is described, the section which counts the predetermined unit period is not limited to the counting section 312. Timing (counting) of the predetermined unit period may be executed by using, for example, an RTC (Real Time Clock) that the chipset 21 includes.

Incidentally, each constitutional element that the management system 100 (100a) includes has a computer system therein. Then, each process in each constitutional element that the management system 100 (100a) includes may be performed by recording each program for realizing each function of each constitutional element that the management system 100 (100a) includes into a computer readable recording medium, making each computer system read each program which is recorded in the computer readable recording medium and then executing each program. Here, "making each computer system read each program which is recorded in the computer readable recording medium and executing each program" implies to install each program into each computer system. Here, "the computer system" shall include the OS and hardware such as the peripherals and so forth.

In addition, "the computer system" may also include a plurality of computer devices which is mutually connected over a network which includes communication lines such as, for example, the Internet, the WAN, the LAN, a leased line and so forth. In addition, "the computer readable recording medium" means a portable medium such as a flexible disc, a magnetooptical disc, a ROM, a CD-ROM and so forth and a storage such as a hard disc which is built in the computer system and so forth. The recording medium which stores the program in this way may be also a non-transitory recording medium such as the CD-ROM and so forth.

In addition, the recording medium also includes a recording medium which is internally or externally installed in a state of being accessible from a distribution server for distribution of the program concerned. Incidentally, a configuration that one program is divided into a plurality of partial programs and these partial programs are downloaded at mutually different timings and then are united together by the respective constitutional elements that the management system 100 (100a) includes may be also made and distribution servers which distribute the divided partial programs respectively may be different from one another. Further, "the computer readable recording medium" shall include a medium of the type of holding the program for a definite period of time such as a server which works in this way in a case where the program is transmitted to the server over the network and a volatile memory (a RAM (Random Access Memory)) which is built in each computer system which serves as a client. In addition, the program may be of the type of realizing some of the above-described functions. Further, the program may be of the type of making it possible to realize the above-described functions by combination with a program which is recorded in advance in each computer system, that is, may be also a so-called differential file (a differential program).

In addition, some of or all the functions which are described above may be realized in the form of an integrated circuit such as an LSI (Large Scale Integration) and so forth. The respective functions may be implemented via processor(s) individually and/or some of or all the functions may be mutually integrated and then implemented via processor (s) . In addition, a technique of circuit integration may be realized by a private circuit or a general-purpose processor, not limited to the LSI. In addition, in a case where a novel circuit integration technology which realizes an integrated circuit which will take the place of the LSI emerges owing to advancement of the semiconductor technology, the integrated circuit which is realized by the novel technology may be also used.

## Claims

1. An information processing apparatus comprising:
a count value storage section which is a nonvolatile memory which is not directly accessible from an OS (Operating System) and stores a count value which indicates a remaining period of a use period;
a BIOS processing section which executes a process which is based on a BIOS (Basic Input Output System), and to prohibit activation of the OS in a case where the count value that the count value storage section stores is a predetermined value and to execute an OS-based activation process in a case where the count value is other than the predetermined value; and
a count value change section which operates independently of the OS and counts and changes the count value that the count value storage section stores every predetermined unit period in a case where the information processing apparatus is in a working state and the count value is other than the predetermined value.

2. The information processing apparatus according to claim 1, wherein
the BIOS processing section,
in a case where the count value that the count value storage section stores is the predetermined value, prohibits activation of the OS and makes a display unit display a two-dimensional code which contains a URL (Uniform Resource Locator) which is used for connection to the server device which manages renewing of the use period, and
further renews the count value that the count value storage section stores in accordance with a request for renewing the use period which is issued from the server device on the basis of a contract that the user makes for renewal of the use period.

3. The information processing apparatus according to claim 1 or 2, wherein
the predetermined value is, for example, "0", and
in a case where the information processing apparatus is in the working state and the account value is other than "0", the count value change section changes the count value by performing subtraction on the count value every predetermined unit period.

4. The information processing apparatus according to any preceding claim, wherein
in a case where the information processing apparatus is in the working state and the count value reaches the predetermined value, the count value change section terminates an operation of the information processing apparatus.

5. The information processing apparatus according to any preceding claim, wherein
a sub control unit which operates independently of a main control unit which executes a process which is based on the OS includes the count value change section, and
the main control unit includes the BIOS processing section.

6. The information processing apparatus according to claim 5, wherein
the sub control unit includes the count value storage section.

7. The information processing apparatus according to claim 5 or 6, wherein
the count value storage section is installed outside the sub control unit.

8. A method of managing an information processing apparatus which includes a count value storage section which is a nonvolatile memory which is not directly accessible from an OS (Operating System) and which stores a count value which indicates a remaining period of a use period, comprising the steps of:
prohibiting activation of the OS in a case where the count value that the count value storage unit stores is a predetermined value and executing an OS-based activation process in a case where the count value is other than the predetermined value by a BIOS processing section which executes a process which is based on a BIOS (Basic Input Output System); and
executing a count value change process independently of the OS and counting and changing the count value that the count value storage unit stores every predetermined unit period in a case where the information processing apparatus in a working state and the count value is other than the predetermined value by a count value change section.
